# EUROPEAN PATENT APPLICATION

(11) **EP 0 718 621 A1**
(43) Date of publication of application: **26.06.1996**
(21) Application number: 95119826.6
(22) Date of filing: 15.12.1995
(51) Int. Cl.: G01N 21/55, G01N 21/77

(54) **Organic vapor distinguishing apparatus**

(30) Priority: 19.12.1994 JP 315025/94
(71) Applicant: HOECHST AKTIENGESELLSCHAFT, D-65929 Frankfurt am Main (DE)
(72) Inventor: Motosugi, Kenji, Kawagoe-shi, Saitama (JP); Liu, Yuan, Dr., Kawagoe-shi, Saitama (JP); Yamamoto, Tetsu, Kawagoe, Saitama (JP)

(57) **Abstract**

An organic gas distinguishing apparatus for reliably distinguishing different kinds of organic gas is disclosed. The apparatus comprises m sensor members which are arranged along a fuel vapor passage and each of which exhibits inherent reflective characteristics when in contact with different m kinds of organic gas, wherein m is an integer of 2 or more. Light source members are provided for each of the m sensor members for irradiating a corresponding one of the sensor members. Detecting members are provided for each of the sensor members for receiving light emitted from a corresponding one of the m light source members and reflected from the corresponding one of the sensor members so as to output a signal representing the intensity of the received light.

The organic gases can be distinguished on the basis of the signs of the obtained differences by comparing the differences in magnitude between signals obtained from respective m kinds of organic gas by the detecting members.

## Description

This invention relates to an apparatus for distinguishing between organic vapors, for example, kinds of fuel vapors.

In automobile fuel supply stations such as a gasoline service station, an apparatus for preventing errors in fuel supply to automobiles by car drivers or service station workers has been proposed. Japanese Patent Publication No. 64958/92 discloses apparatuses for preventing errors in fuel supply by using a contact burning type gas sensor and by sucking a fuel vapor from the fuel tank of automobile before starting the fuel supply and measuring the concentration thereof so as to ascertain the kind of fuels for the automobile. In the above apparatus, the fuel is ascertained to be gasoline when the measured concentration is higher than a predetermined value of the fuel vapor; conversely, the fuel is ascertained to be light oil when the measured concentration is lower than the predetermined value of the fuel vapor.

However, since the fuel supply inlet of a fuel tank of an automobile is open to atmosphere at the time of fueling, the concentration of sucked fuel vapor is considered to vary widely depending upon external factors such as atmospheric conditions. For this reason, even in a gasoline-powered car, a measured value of vapor concentration may be lower than an actual concentration, and, hence, there is a possibility for a gasoline car to be erroneously ascertained to be a light oil car, thereby causing an error in the choice of fuel to be supplied. This defect cannot be avoided as long as a procedure for measuring the concentration of fuel vapor is used.

Also, Japanese Patent Laid-open Publication No. 85200/90 discloses a method for ascertaining kinds of oils based on differences in exhaust sound at the time of exhausting sucked fuel vapor through a pipe-like mechanism. In this method, since the difference in exhaust sound is based on a density of fuel vapors, the fuel vapor to be measured is required to be present at a concentration higher than a certain level. Thus, there is a defect in that, at a very low concentration of fuel vapor, the system may not work.

In view of the above-described problems, an object of the present invention is to provide an apparatus for accurately distinguishing the kinds of organic vapors which avoids any possibility of error.

In order to achieve the above object, the present invention provides an organic gas distinguishing apparatus comprising:
m sensor members each exhibiting unique reflective characteristics when in contact with different m kinds of organic gas, where m is an integer of 2 or more;
m light source members each provided for each of the m sensor members for irradiating a corresponding one of the sensor members;
m detecting members each provided for each of the sensor members for receiving light emitted from a corresponding one of the m light source members and reflected from the corresponding one of the sensor members so as to output a signal representing the intensity of the received light; and
a circuit which distinguishes between the organic gases on the basis of the signs of the obtained differences by comparing the differences in magnitude between signals obtained from respective m kinds of organic gas by the detecting members, thereby distinguishing between the m kinds of organic gas by processing signals obtained from the m detecting members when the m sensor members are disposed in an organic gas to be measured.

Each of the sensor members comprises a reflecting substrate, and a polymer film formed on the reflecting substrate. Each of the polymer films exhibits unique and different reflective characteristics against the m kinds of organic gas. A reflective characteristic of the sensor member is defined by a product of the thickness of the polymer film and the refractive index thereof. At least one of the m light source members comprises a light emitter such as a semiconductor laser and a light emitting diode, and at least one of the m detecting members comprises a light detector such as a photodiode and a phototransistor. At least one of the m light source members may be structured to focus light from a light emitter such as a semiconductor laser and a light emitting diode through an optical fiber and a collimator to the corresponding sensor member.

At least one of the m detecting members may be structured to connect a light detector such as a photodiode and a phototransistor through an optical fiber to a collimator, whereby light emitted from the corresponding light source member and reflected from the sensor member is received by the collimator, the received light being supplied through the optical fiber to the light detector. A light emitting end of the light source member and a light receiving end of the corresponding detecting member are preferably disposed to face the corresponding sensor member.

In an organic gas distinguishing apparatus according to the present invention, the apparatus is preferably structured in a housing in which at least light emitting ends of the m light source members and at least light receiving ends of the m detecting members are disposed to face the m sensor members through a passage of the organic vapor. In this case, said circuit for distinguishing between the organic gases may be included in the housing. The passage of the organic vapor may be straight, curved or bent from an inlet of the organic gas to an outlet thereof. It is preferable to bend the passage in such a manner that the center of a flow of the organic gas approaches the surface of the polymer film of said sensor member, thereby speeding up a response of an organic gas distinguishing apparatus according to the present invention.

The m sensor members exhibit unique and different reflective characteristics against m different organic gases. These sensor members are disposed in a measured organic gas and irradiated by the light source members. Then, the beams of light emitted by the m light source members are reflected by the m sensor members at intensities which correspond to the kind of organic gas and the density thereof. The reflected beams of light are received by the m detecting members which in turn compare the amplitudes of the obtained signals thereby obtaining differences between those amplitudes. On the basis of the signs of the obtained differences, one can determine which of the m organic gases the measured organic gas is.

Fig. 1 schematically shows the structure of a fuel vapor distinguishing apparatus according to the present invention.

Fig. 2 (a) schematically shows the structure of a detecting unit of Fig. 1, and Fig. 2 (b) schematically shows a modified example of the detecting unit of Fig. 1.

Fig. 3 is a graph for explaining an interference enhanced reflection method which is an operational principle of the present invention.

Fig. 4 shows an example of a relationship between outputs from two detecting units having different sensitivities to gasoline vapor and light oil vapor and the concentrations of these vapors.

Fig. 5 shows another example of a relationship between outputs from two detecting units having different sensitivities to gasoline vapor and light oil vapor and the concentrations of these vapors.

Fig. 6 shows still another example of a relationship between outputs from two detecting units having different sensitivities to gasoline vapor and light oil vapor and the concentrations of these vapors.

Fig. 7(a) is a cross-sectional view of a fuel vapor distinguishing apparatus according to the present invention wherein two of the detecting units of Fig. 1 are integrated and disposed in a housing, and Fig. 7(b) is a cross-sectional view taken along a I-I line of the fuel vapor distinguishing apparatus shown in Fig. 7(a).

Fig. 8 shows a modified example of the fuel vapor distinguishing apparatus shown in Fig. 7(a).

Fig. 9 shows a circuit example for the signal processing unit shown in Fig. 1 for distinguishing gasoline vapor and light oil vapor.

Fig. 10 shows another circuit example for the signal processing unit shown in Fig. 1.

Fig. 11 is a cross-sectional view of an embodiment of the fuel vapor distinguishing apparatus shown in Fig. 1 containing two detecting units.

Fig. 12 shows a combination of the detecting units shown in Fig. 11 and the signal processing unit.

Fig. 13 is a graph showing a relationship between relative concentrations of gasoline vapor and the outputs of three different detecting units according to the present invention.

Fig. 14 is a graph showing a relationship between relative concentrations of light oil vapor and the outputs of the detecting units used for the measurement in Fig. 13.

Fig. 15 is a graph showing a relationship between relative concentrations of a methanol vapor and the outputs of the detecting units used for the measurement in Fig. 13.

Fig. 16 is a drawing showing a circuit example of the signal processing unit shown in Fig. 1 for distinguishing between gasoline vapor and light oil vapor.

Fig. 17 schematically shows a system for supplying a fuel vapor to a fuel vapor distinguishing apparatus according to the present invention.

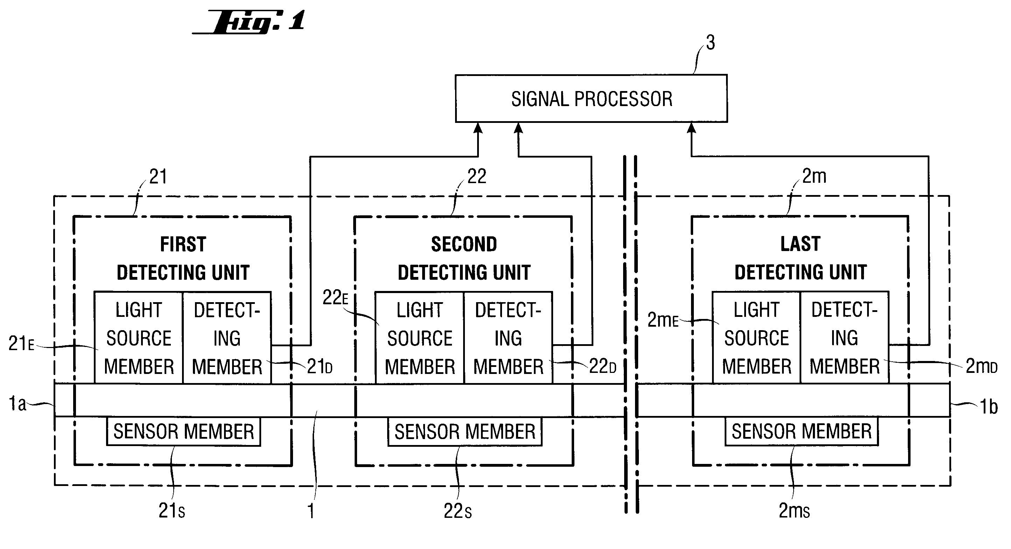

An example of an organic gas distinguishing apparatus according to the present invention is described hereinafter in detail taking an example where the distinguishing apparatus is applied to the distinguishing between fuel vapors. Fig. 1 schematically shows the structure of a fuel vapor distinguishing apparatus to which the apparatus of the present invention is applied. The fuel vapor distinguishing apparatus is designed so as to be able to distinguish m kinds of fuel vapors wherein m is an integer of 2 or more. One of the m kinds of fuel vapors is introduced from one end 1a of a fuel vapor passage 1 formed in a housing and which is a space through which the fuel vapor passes, and is exhausted from the other end 1b. Along fuel vapor passage 1, the first to m-th detecting units 21 to 2m are arranged.

Each of these detecting units has a structure where a light source member, a sensor member and a detecting unit are mounted unitedly in housing (shown by a dotted line), and the structure thereof will be hereinafter described with reference to, as an example, first detecting unit 21. First detecting unit 21 comprises a light source member 21_{E} which emits light toward fuel vapor passage 1, a sensor member 21_{S} which is mounted at a position facing light source member 21_{E} across fuel vapor passage 1 so as to come into contact with the fuel vapor, and which is irradiated with light from light source 21_{E}, and a detecting member 21_{D} which is mounted at the same side as light source member 21_{E} with respect to the fuel vapor passage 1 and which receives the light reflected by sensor member 21_{S}.

The above structure is common in each of the detecting units, but sensor members 21_{S} to 2m_{S} have characteristics different from each other. That is, a group of reflective characteristics of sensor member 2k_{S} of an arbitrary detecting unit 2k to m kinds of fuel vapor (wherein k is a positive integer of 2 or more and equal to m or less) which differs from a group of reflective characteristics of sensor member 2j_{S} of an arbitrary detecting unit 2j (wherein j is an integer of 2 or more and equal to m or less but different from k).

Accordingly, it is possible to distinguish the kind of fuel vapor being introduced into fuel vapor passage 1 by supplying output signals from detecting members 21_{D} to 2m_{D} of detecting units 21 to 2m and subjecting the output signals to, for example, a processing unit for comparing the intensities of the signals.

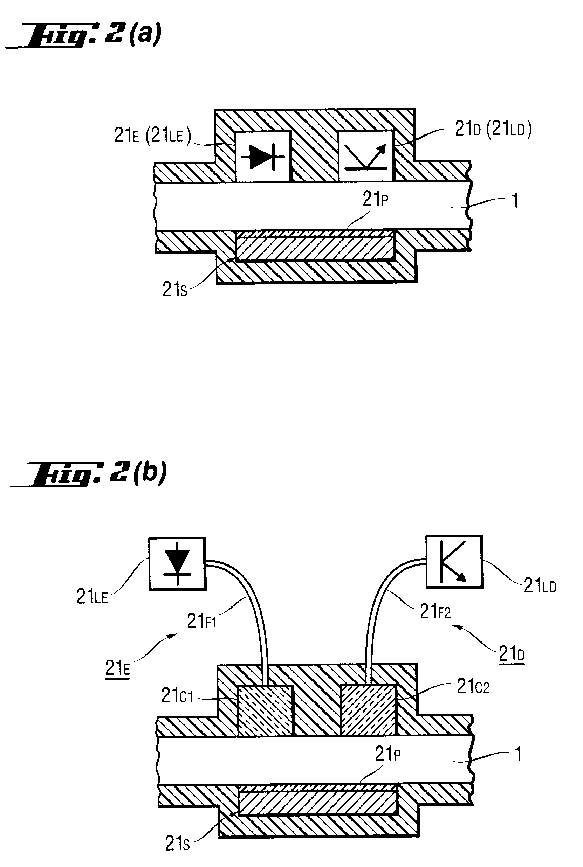

The constituting members of detecting unit 21 as typical example of m detecting units 21 to 2m will be further described with reference to Fig. 2(a). In Fig. 2(a), a light-emitting end of light-emitting member 21_{LE} constituting light source member 21_{E} and a light-receiving end of light-detecting member 21_{LD} constituting detecting member 21_{D} are mounted parallel to fuel vapor passage 1. Sensor member 21_{S} is provided with a polymer film 21_{P} formed on a flat substrate such as silicon wafer so as to face the light-emitting end and the light-receiving end. As to light-emitting member 21_{LE}, any device which is capable of emitting a visible light or a near infrared ray, for example, a semiconductor laser or a light-emitting diode can be used, but a light-emitting diode is advantageous from the standpoint of cost and size. As to light-detecting member 21_{LD}, a photodiode or phototransistor can be used. Polymer film 21_{P} has characteristics as such that the thickness and the refractive index of the film vary by a reaction with a first fuel vapor or by adsorption or absorption of the first fuel vapor, and is formed on a substrate by, for example, a spin-coating method.

Alternatively, a device in which light-emitting member 21_{LE} and light-detecting member 21_{LD} are integrated (a device so-called "photo-interruptor" or "photo-reflector" comprising a light-emitting diode and a photo-transistor) can be used.

As shown in Fig 2(b), if it is difficult to mount light-emitting member 21_{LE} and light-detecting member 21_{LD} in the vicinity of fuel vapor passage 1, light source member 21_{E} can be constructed by coupling collimator 21_{C1} to light-emitting member 21_{LE} through optical fiber 21_{F1}, and detecting member 21_{D} can be constructed by coupling collimator 21_{C2} to light-detecting member 21_{LD} through optical fiber 21_{F2}. Then, a light-emitting end of collimator 21_{C1} and a light-receiving end of collimator 21_{C2} can be arranged to face fuel vapor passage 1, whereby parallel light can be irradiated and received by these collimators.

In Fig. 2(a) and Fig. 2(b), the light-emitting ends of light-emitting member 21_{LE} and collimator 21_{C1}, and the light-receiving ends of light-detecting member 21_{LD} and collimator 21_{C2} are not necessarily parallel to fuel vapor passage 1. The light-emitting end may be inclined at a predetermined angle in relation to fuel vapor passage 1 and the light-receiving end may be inclined correspondingly.

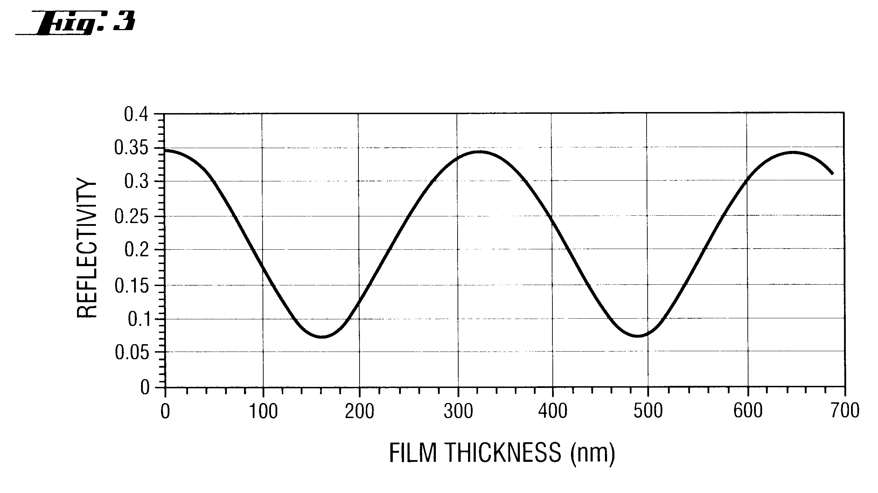

Distinction between fuel vapors in the fuel vapor distinguishing apparatus shown in Fig. 1 can be achieved based on interference enhanced reflection, and is described hereinafter in detail. When fuel vapor passes through the fuel vapor passage of the fuel vapor distinguishing apparatus shown in Fig. 1, the product of the thickness and the reflective index of each of the polymer films of sensor members 21_{S} to 2m_{S} varies. This variation is detected by the detecting unit as a variation in intensity of reflected light from the polymer film, i.e., a variation in reflective characteristic, and is converted into an electrical signal. Practically, a variation in reflective index is considered to be small and a variation in the presence of a fuel vapor mainly occurs in the film thickness of the polymer film. It is noted that a variation in film thickness caused by one kind of fuel vapor is different for all sensor members, and that, with respect to one kind of fuel vapor introduced, the thickness of the polymer film in one sensor member among the sensor members 21_{S} to 2m_{S} varies to a greater degree than those of the polymer films of the remaining sensor members. The former is a sensor member having a higher sensitivity to the introduced fuel vapor, and the latter is a sensor member having a lower sensitivity to the introduced fuel vapor. Accordingly, m detecting units 21 to 2m produce a group of different reflective characteristics for each of the introduced fuel vapors. Fig. 3 shows a relationship between a variation in film thickness of the polymer film having a higher sensitivity to a certain kind of fuel vapor and the reflectance when it is irradiated with light having a wavelength of 940 nm at an incident angle of 23 degrees. As is understood from Fig. 3, the reflectance increases and decreases alternately as the thickness of the polymer film increases. Thus, if the thickness of the polymer film is set to a value slightly larger than the thickness corresponding to the minimum value of the reflectance, the reflectance simply increases with respect to the increase in film thickness up to a certain level, and, conversely, if the thickness of the polymer film is set to a value slightly larger than the thickness corresponding to the maximum value of the reflectance, the reflectance simply decreases with respect to the increase in film thickness up to a certain level. The thickness of the polymer film is considered to be a function of simply increasing with the increase in concentration of fuel vapor, and, therefore, if the thickness of the polymer film is selected to be the maximum value or the minimum value as described above, a functional relationship of a simple increase or a simple decrease is established between the concentration of fuel vapor and the reflectance (i.e., the output of the detecting member). The term "output of the detecting member" as used herein means a value determined by subtracting the output of the detecting member in the presence of air from the output of the detecting member in the presence of the fuel vapor. A relationship between a variation in film thickness of the polymer film and a variation in reflectance depends on an angle of incidence of light to the polymer film and an angle of reflection from the polymer film. Therefore, in the case of light containing a P polarized light component and a S polarized light component at equal amounts, the sensitivity of the detecting member can be increased when an angle of incidence to the polymer film and an angle of reflection from the polymer film is smaller.

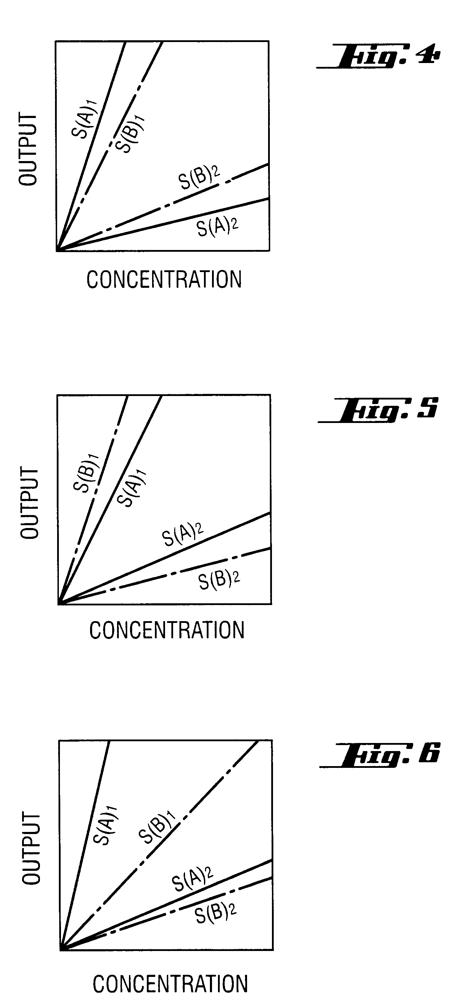

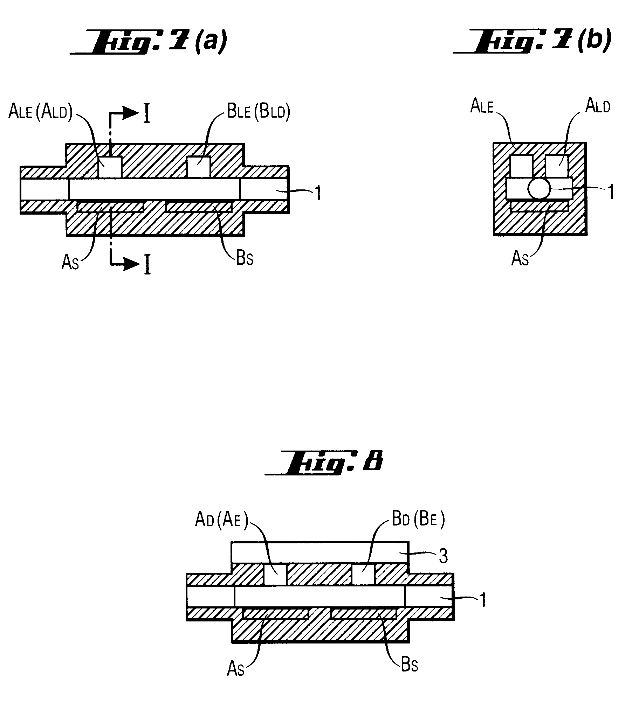

A relationship between the concentration of a fuel vapor and a variation in the thickness of the polymer film (i.e., a relationship between the concentration of a fuel vapor and the reflectance of the polymer film) is determined solely by the kind of fuel and the kind of polymer used for the sensor member. More specifically, by selecting a kind of polymer used for the sensor member, it is possible, in principle, to cause the selected polymer to generate a reflective characteristic or a sensitivity inherent to specific fuel vapor. Ideally, it is desirable to use a polymer which has a high sensitivity to a specific fuel vapor such as gasoline and light oil and which has no sensitivity to remaining fuel vapors. Practically, however, it is difficult to make a sensitivity to an undesirable fuel vapor zero, which fuel however may be selected. Thus, as shown in Fig. 1, according to the present invention, m series of detecting units using m kinds of polymers having different sensitivities from each other to m kinds of fuel vapors are prepared, and kinds of fuel vapors or oils can be assumed from a combination of mutual amplitude relationship of signals outputted from these series of detecting units. For example, let us assume that fuel vapors to be distinguished are gasoline and light oil, and that, as shown in Fig. 4, a relationship between the output of detecting unit A using a polymer γ, the output of detecting unit B using a polymer δ and the concentrations of gasoline vapor and light oil vapor, i.e., sensitivity characteristics, is set in such a manner that output S(A)₁ of detecting unit A is always greater than output S(B)₁ of detecting unit B in the case where the fuel vapor to be measured is a gasoline vapor, and that the output S(A)₂ of detecting unit A is always smaller than output S(B)₂ of detecting unit B in a case where the fuel vapor to be measured is light oil. Detecting units A and B are disposed along the fuel vapor passage. When a gasoline vapor or a light oil vapor is passed through the fuel vapor passage, in the case of S(A)₁ > S(B)₁, the vapor to be measured can be assumed to be the gasoline vapor irrespective of its concentration, and, in the case of S(A)₂ > S(B)₂, the fuel vapor to be measured can be assumed to be the light oil vapor irrespective of its concentration. Also, as shown in Fig. 5, let us assume that the sensitivities of detecting units A and B are set in such a manner that output S(A)₁ of detecting unit A is always smaller than output S(B)₁ when the fuel vapor to be measured is a gasoline vapor, and that output S(A)₂ of detecting unit A is always greater than output S(B)₂ in a case where the fuel vapor to be measured is a light oil vapor. Then, if S(A)₂ > S(B)₂, the fuel vapor to be measured can be assumed to be the light oil vapor irrespective of its concentration, and, if S(A)₁ < S(B)₁, the fuel vapor to be measured can be assumed to the gasoline vapor irrespective of its concentration. Further, the relationships shown in Fig. 4 and Fig. 5 need not be satisfied directly by the outputs of the detecting units. For example, as shown in Fig. 6, in the case where the relationship is always S(A)₁ > S(B)₁ and S(A)₂ > S(B)₂ whether fuel vapor to be measured is a gasoline vapor or a light oil vapor, either output of the detecting units can be converted to satisfy the relationship of Fig. 4 by amplifying or attenuating the output by suitable amount, as long as S(A)₁/S(B)₁ with respect to the gasoline vapor is greater than S(A)₂/S(B)₂ with respect to the light oil vapor.

Such an apparatus for distinguishing two kinds of fuel vapor as described above, preferably is a housing structure supported unitedly and is structured so that detecting unit A has a higher sensitivity to a gasoline vapor than that of a light oil vapor and detecting unit B has a higher sensitivity to a light oil vapor than that of a gasoline vapor. Figs. 7(a) and 7(b) show an example of such a structure which unitedly supports a sensor member Aₛ of detecting unit A which has a high sensitivity to a gasoline vapor and is disposed to face light-emitting member A_{LE} and light-detecting member A_{LD} across fuel vapor passage 1, sensor member B_{S} of detecting unit B which has a higher sensitivity to a light oil vapor and is disposed downstream of sensor member A_{S} to face light-emitting member B_{LE} and light-detecting member B_{LD} across fuel vapor passage 1. Fuel vapor passage 1, into which fuel vapors to be measured are introduced and discharged, is desirably closed to outside atmosphere from the standpoint of safety. The housing can be constructed by metals or plastics. It is desirable that a distance between the center of a stream of the fuel vapor to be measured introduced into fuel vapor passage 1 and a surface of the polymer film of the sensor member is as short as possible, preferably 1 mm or less, and a path of the fuel vapor to be measured may be straight, curved or bent.

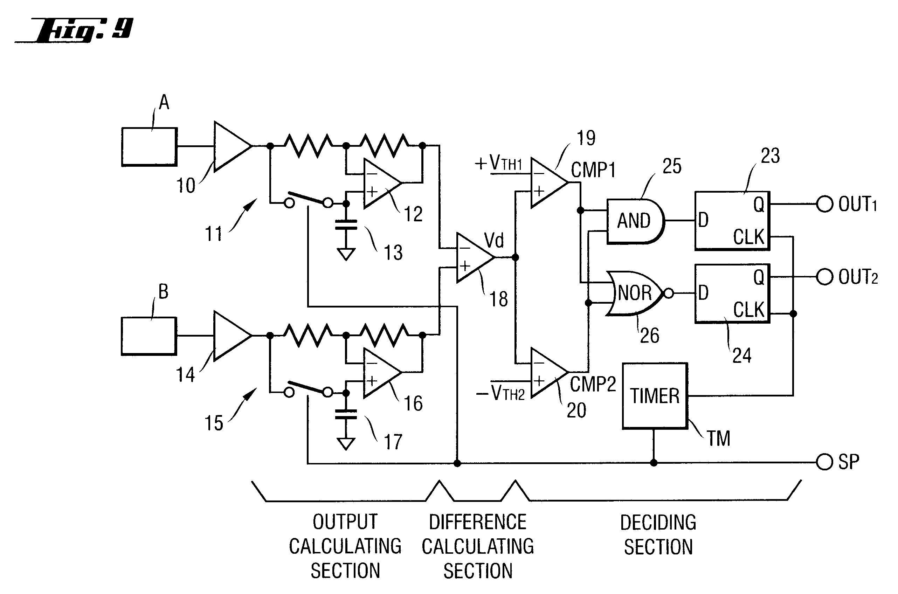

Light-emitting members A_{LE} and B_{LE} and light-detecting members A_{LD} and B_{LD} in Fig. 7(a) and 7(b) may be coupled to the collimators through optical fibers as shown in Fig. 2(b). Further, as shown in Fig. 8, signal processing member 3 which drives and controls light source members A_{E} and B_{E} and performs a processing of signals from detecting members A_{D} and B_{D} can be integrally mounted on an external surface of the housing. By using such a structure, wires connecting between detecting members A_{D} and B_{D} and signal processing member 3 run within the distinguishing apparatus, thereby enabling the apparatus to be structured such as to be easily handled. Also, since the optical fibers are used, no electric energy is supplied to the housing and the apparatus is advantageous from the standpoint that it prevents any likelihood of explosion.

Now, the structure and the function of signal processing member 3 shown in Fig. 1 will be described by taking the case of using two detecting units A and B for the purpose of distinguishing between gasoline and light oil. As signal processing member 3, a circuit comprising a combination of an analog circuit and a logical circuit, or a circuit using a microcomputer can be used. First, Fig. 9 shows a block diagram of an example of the circuit as a combination of analog and logical circuits. This circuit includes two output calculating sections, a difference calculating section and a deciding section. The fuel vapor distinguishing apparatus of Fig. 1 is usually supplied with air, but, at a certain point of time, begins to synchronize with an external controlling system which supplies gasoline vapor or light oil vapor.

The output calculating section includes a first system comprising a sample and hold circuit 11 which receives the output of detecting unit A which has a higher sensitivity to a gasoline vapor than that of a light oil vapor through a buffer amplifier 10 and an inverting amplifier 12, and a second system comprising a sample and hold circuit 15 which receives the output of detecting unit B which has a higher sensitivity to a light oil vapor than that of a gasoline vapor through a buffer amplifier 14 and an inverting amplifier 16. Both systems are in a "sample mode" when the controlling system supplies air, and values representing output signals from detecting units A and B when air is supplied are stored in capacitors 13 and 17. At the moment when the control system stops the supply of air and starts to supply the fuel vapor to be measured, a start pulse SP is applied to sample and hold circuits 11 and 15 whereby the first and second systems are switched to a "hold mode". By this switching, the values stored in capacitors 13 and 17 are applied to a non-inverting input of inverting amplifiers 12 and 16, and output signals from detecting units A and B with respect to the fuel vapor to be measured are applied to an inverting input of inverting amplifiers 12 and 16. Thus, each of converting amplifiers 12 and 16 outputs an inverting signal having an amplitude which corresponds to a product of a gain and a difference between the value obtained when air is supplied and the value obtained when the fuel vapor to be measured is supplied. More specifically, assuming that values obtained from detecting units A and B by subtracting the output with respect to air from the output with respect to the fuel vapor to be measured are referred to as S(A) and S(B), respectively, and that the gains of inverting amplifiers 12 and 16 are referred to as Ga and Gb, respectively, then the outputs of the output calculating section are represented by -Ga × S(A) and -Gb × S(B), respectively.

Also, it is possible to compensate for any variation by temperature through the dependency of the outputs of two detecting units on the fuel vapor concentration. This can be achieved by disposing a temperature sensor or a device having an electrical resistance changeable by temperature (for example, a thermistor) near detecting units A and B and, by utilizing this device while changing the gains of the inverting amplifiers 12 and 16 with temperature.

The difference calculating section is constructed by a differential amplifier 18. The outputs of the first and second systems are applied to inverting and non-inverting inputs of amplifier 18, respectively, whereby differential amplifier 18 provides a difference between the outputs of two systems. That is, the output Vd equals Ga × S(A) - Gb × S(B).

The deciding section decides which of Ga × S(A) and Gb × S(B) is larger using the sign of Vd. In order to achieve this, the deciding section has two comparators 19 and 20. Output Vd of differential amplifier 18 is applied to non-inverse inputs of these comparators and threshold levels + V_{TH1} and -V_{TH2} are applied to the inverse inputs thereof, respectively. Thus, comparators 19 and 20 provide outputs CMP1 and CMP2 which respectively represent the results of the comparison between output Vd and threshold levels + V_{TH1} and - V_{TH2}. Comparators 19 and 20 output a high level signal when output Vd exceeds threshold levels + V_{TH1} and -V_{TH2} and output a low level signal when output Vd is lower than threshold levels + V_{TH1} and -V_{TH}2.
Outputs CMP1 and CMP2 of comparators 19 and 20 are inputted to an AND circuit 25 and a NOR circuit 26, respectively. Accordingly, when both outputs CMP1 and CMP2 are at a high level, the output of AND circuit 25 is at a high level and the output of NOR circuit 26 is at a low level. Conversely, when both outputs CMP1 and CMP2 are at a low level, the output of AND circuit 25 is at a low level and the output of NOR circuit 26 is at a high level. When the output of AND circuit 25 is at a high level and the output of NOR circuit 26 is at a low level, a Q output OUT₁ of a flip-flop 23 is at a high level, and a Q output OUT₂ of a flip-flop 24 is at a low level. Conversely, when the output of AND circuit 25 is at a low level and the output of NOR circuit 26 is at a high level, a Q output OUT₂ of flip-flop 24 is at a high level, and a Q output OUT₁ of flip-flop 23 is at a low level. A timer TM activated by start pulse SP provides a clock pulse to flip-flops 23 and 24 when a predetermined time has passed after the receipt of the start pulse, whereby the outputs of these flip-flop are latched.

Accordingly, when a fuel vapor to be measured is supplied, if Q output OUT₁ of flip-flop 23 reaches a high level, Vd is positive, from which it can be concluded that the fuel vapor to be measured can be determined to be a gasoline vapor. If Q output OUT₂ of flip-flop 24 reaches a high level, Vd is negative, and it can be concluded that the fuel vapor to be measured can be determined to be a light oil vapor. The results of such decisions are taken out as digital or analog signals.

When one of outputs CMP1 and CMP2 of comparators 19 and 20 is positive and the other is negative, Vd resides between the two threshold levels, and the sign of signal Vd, that is, a kind of the fuel vapor to be measured, cannot be determined. Decreasing absolute values of the two threshold levels to zero will reduce the possibility that the sign of Vd cannot be determined; however, the possibility of misjudgment due to noise will increase. For this reason, it is advisable that the threshold levels are determined at suitable values by taking noise level into consideration. Also, when the concentration of a fuel vapor is too low, it is impossible to determine the sign of Vd. As the deciding section, in Fig. 9, it is possible to use a circuit which integrates outputs from the difference calculating section for a certain period of time to decide the sign of the results of the integration. Since such a circuit can enlarge the differences and noise components are averaged by the integration, an S/N ratio can be improved.

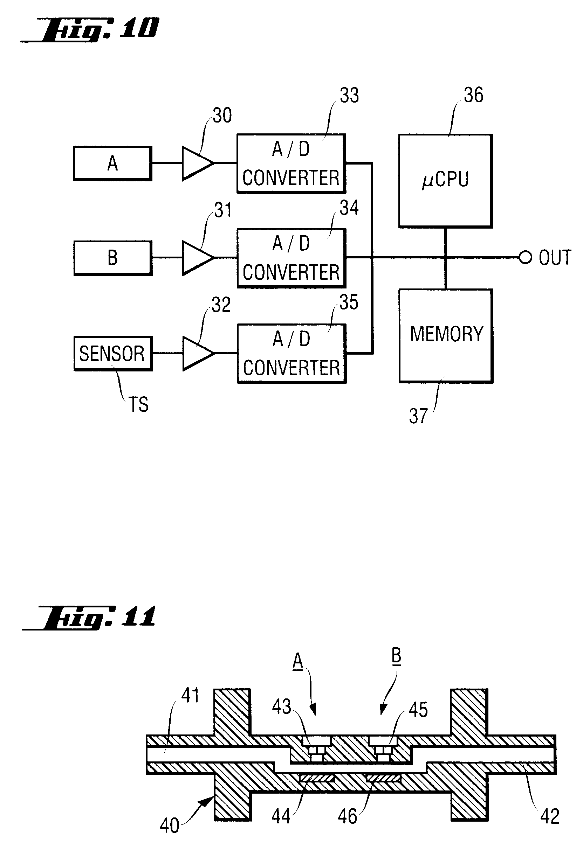

An embodiment where signal processing member 3 comprises a microcomputer will be described hereinafter with reference to Fig. 10. The outputs from two detecting units A and B are converted into digital data by A/D converters 33 and 34 through buffer amplifiers 30 and 31 and supplied to a microcomputer 36 through data buses. Microcomputer 36 is connected to a memory 37 storing a program for performing the same operation as that of the circuit shown in Fig. 9, and provides results of distinction to an output terminal OUT as digital data, digital signals or analog signals. Also, as shown in Fig. 10, it is possible to perform such an operation for temperature compensation as conducted in Fig. 9 by means of a software by arranging an appropriate temperature sensor TS near detecting units A and B and providing the output of temperature sensor TS to A/D converter 35 through buffer amplifier 32 thereby supplying the converted digital signal to microcomputer 36.

The polymer which is formed as a polymer film in the sensor member of the detecting unit is preferably a homopolymer or a copolymer having the following repeating unit 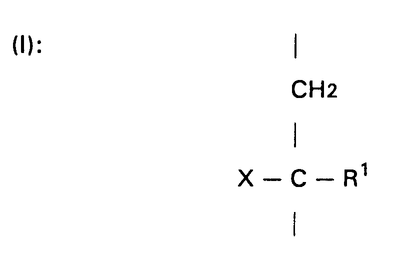
wherein
- X: represents -H, -F, -Cl, -Br, -CH₃, -CF₃, -CN or -CH₂ -CH₃;
- R¹: represents -R² or -Z-R²; Z represents -O-, -S-, -NH-, -NR^{2'}-, -(C=Y)-, -(C=Y)-Y-, -Y-(C=Y)-, -(SO₂)-, -Y'-(SO₂)-, -(SO₂)-Y'-, -Y'-(SO₂)-Y'-, -NH-(C=O)-, -(C=O)-NH-, -(C=O)-NR^{2'}-, -Y'-(C=Y)-Y'- or -O-(C=O)-(CH₂)ₙ-(C=O)-O-;
- Y: represents the same or different O or S; Y' represents the same or different O or NH; n is an integer from 0 to 20; and R² and R^{2'} represent the same or different hydrogen, straight chain alkyl group, a branched chain alkyl group, a cycloalkyl group, an unsaturated hydrocarbon group, an aryl group, a saturated or unsaturated hetero ring, or a substitution product thereof. R¹ cannot be hydrogen, a straight chain alkyl group or a branched alkyl group.

In the above formula, X is preferably H or CH₃, R¹ is preferably a substituted or unsubstituted aryl group of -Z-R², Z is preferably -O-, -(C=O)-O- or -O-(C=O)-, and R² is preferably a straight chain alkyl group, a branched chain alkyl group, a cycloalkyl group, an unsaturated hydrocarbon group, an aryl group, a saturated or unsaturated hetero ring or a substitution product thereof.

A polymer used as the polymer film may be a polymer consisting of a single repeating unit (I), a copolymer consisting of other repeating units and the above repeating unit (I), or a copolymer consisting of two or more of the above repeating unit (I). The repeating units in the copolymer may have any type of arrangement and, for example, a random copolymer, an alternating copolymer, a block copolymer or a graft copolymer can be used. In particular, the polymer film is preferably made of polymethacrylic acid esters or polyacrylic acid esters. A side chain in the ester is preferably a straight chain or branched alkyl group or a cycloalkyl group, and the number of carbon is preferably from 4 to 22.

Examples of polymers particularly preferred for the polymer film are as follows:
poly(dodecyl methacrylate),
poly (isodecyl methacrylate),
poly(2-ethylhexyl methacrylate),
poly (2-ethylhexyl methacrylate-co-methyl methacrylate),
poly(2-ethylhexyl-methacrylate-co-styrene),
poly(methyl methacrylate-co-2-ethylhexyl acrylate),
poly(methyl methacrylate-co-2-ethylhexyl methacrylate),
poly(isobutyl methacrylate-co-glycidyl methacrylate),
poly(cyclohexyl methacrylate),
poly(octadecyl methacrylate),
poly(octadecyl methacrylate-co-styrene),
poly(vinyl propionate),
poly(dodecyl methacrylate-co-styrene),
poly(dodecyl methacrylate-co-glycidyl methacrylate),
poly(butyl methacrylate),
poly(butyl methacrylate-co-methyl methacrylate),
poly(butyl methacrylate-co-glycidyl methacrylate),
poly(2-ethylhexyl methacrylate-co-glycidyl methacrylate),
poly(cyclohexyl methacrylate-co-glycidyl methacrylate),
poly(cyclohexyl methacrylate-co-methyl methacrylate),
poly(benzyl methacrylate-co-2-ethylhexyl methacrylate),
poly(2-ethylhexyl methacrylate-co-diacetoneacrylamide),
poly(2-ethylhexyl methacrylate-co-benzyl methacrylate-co-glycidyl methacrylate),
poly(2-ethylhexyl methacrylate-co-methyl methacrylate-co-glycidyl methacrylate),
poly(vinyl cinnamate)
poly(vinyl cinnamate-co-dodecyl methacrylate),
poly(tetrahydrofurfuryl methacrylate),
poly(hexadecyl methacrylate),
poly(2-ethylbutyl methacrylate),
poly(2-hydroxyethyl methacrylate),
poly(cyclohexyl methacrylate-co-isobutyl methacrylate),
poly(cyclohexyl methacrylate-co-2-ethylhexyl methacrylate),
poly(butyl methacrylate-co-2-ethylhexyl methacrylate),
poly(butyl methacrylate-co-isobutyl methacrylate),
poly(cyclohexyl methacrylate-co-butyl methacrylate),
poly(cyclohexyl methacrylate-co-dodecyl methacrylate),
poly(butyl methacrylate-co-ethyl methacrylate),
poly(butyl methacrylate-co-octadecyl methacrylate),
poly(butyl methacrylate-co-styrene),
poly(4-methylstyrene),
poly(cyclohexyl methacrylate-co-benzyl methacrylate),
poly(dodecyl methacrylate-co-benzyl methacrylate),
poly(octadecyl methacrylate-co-benzyl methacrylate),
poly(benzyl methacrylate-co-tetrahydrofurfuryl methacrylate),
poly(benzyl methacrylate-co-hexadecyl methacrylate),
poly(dodecyl methacrylate-co-methyl methacrylate),
poly(dodecyl methacrylate-co-ethyl methacrylate),
poly(2-ethylhexyl methacrylate-co-dodecyl methacrylate),
poly(2-ethylhexyl methacrylate-co-octadecyl methacrylate),
poly(2-ethylbutyl methacrylate-co-benzyl methacrylate),
poly(tetrahydrofurfuryl methacrylate-co-glycidyl methacrylate),
poly(styrene-co-octadecyl acrylate),
poly(octadecyl methacrylate-co-glycidyl methacrylate),
poly(4-methoxystyrene),
poly(2-ethylbutyl methacrylate-co-glycidyl methacrylate),
poly(styrene-co- tetrahydrofurfuryl methacrylate),
poly(2-ethylhexyl methacrylate-co-propyl methacrylate),
poly(octadecyl methacrylate-co-isopropyl methacrylate),
poly(3-methyl-4-hydroxystyrene-co-4-hydroxystyrene), and
poly(styrene-co-2-ethylhexyl methacrylate-co-glycidyl methacrylate).

In the above-described methacrylic acid esters and the copolymers thereof, acrylic acid may be used in place of methacrylic acid. Also, the above-described polymers per se can be crosslinked, but the crosslinking may be effected by introducing a compound having a reactive group for crosslinking into the polymer. Examples of such reactive groups for crosslinking include an amino group, a hydroxy group, a carboxyl group, an epoxy group, a carbonyl group and a urethane group as well as derivatives thereof, maleic acid, fumaric acid, sorbic acid, itaconic acid and cinnamic acid as well as derivatives thereof. Materials having a chemical structure capable of forming carben or nitrene upon irradiation with visible light, ultraviolet rays or high energy radioactive rays can also be used as crosslinking agents. Since a film formed from the crosslinked polymer is insoluble, the stability of the sensor can be increased by crosslinking the polymer forming the polymer film of the sensor. Various methods for crosslinking can be used for this purpose, and a conventional crosslinking method, for example, a heating method as well as a method by irradiation with light or radioactive rays can be used.

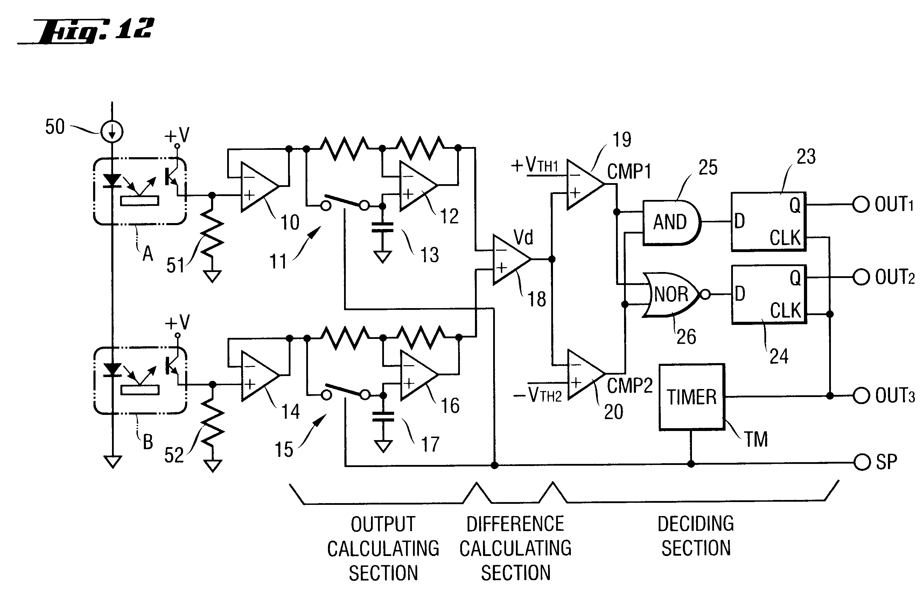

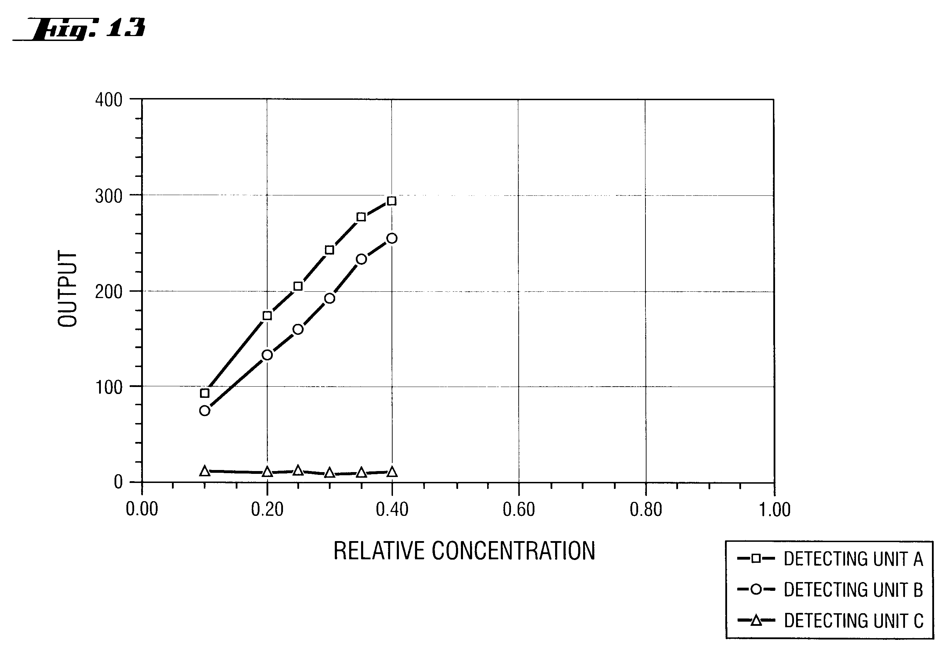

Now, an example by which an apparatus according to the present invention for distinguishing fuel vapors between a gasoline vapor and a light oil vapor is embodied will be described hereinafter. The fuel vapor distinguishing apparatus has a structure shown in Fig. 11, and a fuel vapor introducing port 41 and a fuel vapor discharging port 42 each having an inner diameter of 6 mm and a length of 10 mm with a hollow of 2 mm diameter are provided at both ends of a rectangular housing 40 having a length of 40 mm, a width of 20 mm and a height of 20 mm. The fuel vapor passage of this apparatus has a bent portion as shown in Fig. 11. In the bent portion, the direction of the fuel vapor stream introduced into this apparatus is forcedly altered and, therefore, the center portion of the stream passes near the polymer film of the sensor member, resulting in an accelerated response to fuel vapor distinction in this apparatus. Housing 40 contains detecting unit A comprising a device 43 in which a light-emitting diode having a center wavelength of 940 nm and a silicon photo-transistor are integrated (for example, a photo-reflector P 2826 manufactured by Hamamatsu Photonics Co. Ltd.) and a sensor member 44 having a sensitivity to a gasoline vapor and mounted to face device 43, and detecting unit B comprising a device 45 in which a light-emitting diode having a center wavelength of 940 nm and a silicon photo-transistor are integrated and a sensor member 46 having a sensitivity to a light oil vapor and mounted to face device 45.

In the above photo-reflector P 2826, since the light-emitting diode and the photo-transistor are arranged at a distance of 2.1 mm, the angle of incidence of light emitted from the light-emitting diode to the sensor member, that is, the angle of reflection of light from the sensor member, is 19.3 degrees. Sensor members 44 and 46 are prepared by forming a polymer film having a film thickness of about 200 nm by the spin-coating method on a rectangular silicon wafer having a length of about 8 mm, a width of about 6 mm and a thickness of about 0.5 mm. The polymer used for sensor member 44 is poly(benzyl methacrylate-co-2-ethylhexyl methacrylate), and the polymer used for sensor member 46 is poly(octadecyl methacrylate-co-glycidyl methacrylate).

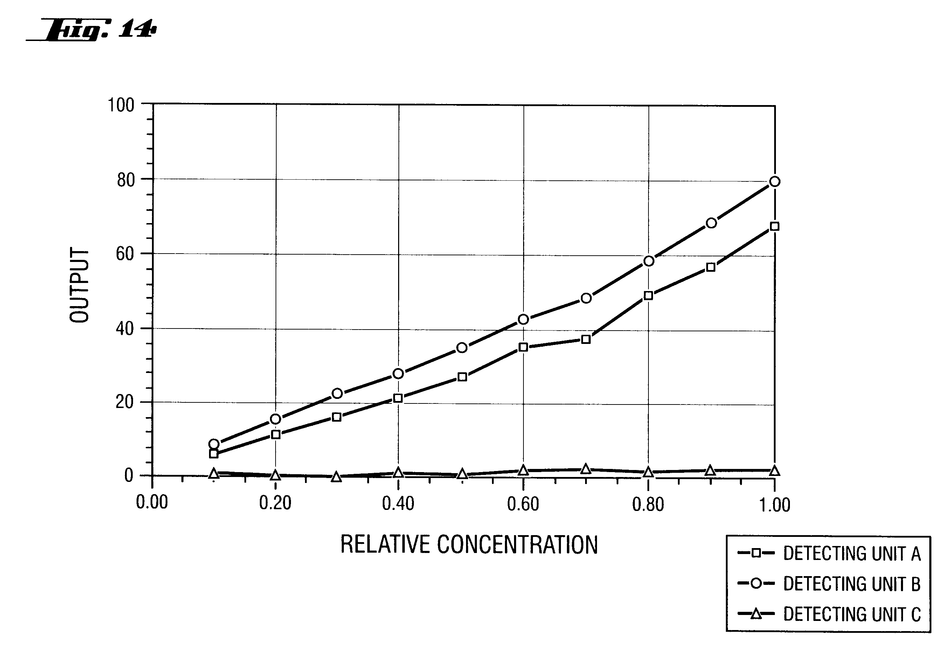

Fig. 12 shows how detecting units A and B used in the photo-reflector P2826 and the circuits of Fig. 9 are interconnected. The light-emitting diode in each of the detecting units is continuously driven by an electric power 50 of a constant electric current of 10 mA. Light emitted by the light-emitting diode is received by the collector of the photo-transistor, converted into an electric signal by the resistors 51 and 52, and, through buffer amplifiers 10 and 14 (voltage follower circuits using operating amplifiers), inputted to an output calculating circuit. The subsequent operations are already described with reference to Fig. 9 and are omitted herein. In Fig. 12, whether a fuel vapor to be measured is a gasoline vapor or a light oil vapor is indicated by Q outputs OUT₁ and OUT₂ of flip-flop 23 and 24; at the same time, whether the output data is valid or not is indicated at output OUT₃ of timer TM. As described with respect to the circuit of Fig. 9, timer TM starts at the time when start pulse SP is applied, that is, when a fuel vapor to be measured is supplied to the fuel vapor distinguishing apparatus. Accordingly, output OUT₃ of timer TM is at a low level for a certain period of time from the application of start pulse SP and indicates that the data is invalid. After a lapse of the above period of time, output OUT₃ becomes high and indicates that the data is valid. Q outputs OUT₁ and OUT₂ of flip-flops 23 and 24 are valid only when output OUT₃ of timer TM is at a high level.

The following Tables 1 and 2 respectively show decisions at various concentrations of a gasoline vapor and a light oil vapor at a temperature of 20°C when the gain of inverting amplifier 18 of Fig. 12 is 2 and threshold levels + V_{TH1} = -V_{TH2} = 5 mV. Flip-flops 23 and 24 are adjusted to latch the outputs about 0.25 second after the introduction of the fuel vapor to be measured. In these tables, "1" indicates a high level and "0" indicates a low level.

**Table 1**

| Relative Concentration | Light Oil Decision Output | Gasoline Decision Output |
|---|---|---|
| 0.01 | 0 | 0 |
| 0.015 | 0 | 0 |
| 0.02 | 0 | 0 |
| 0.025 | 0 | 1 |
| 0.03 | 0 | 1 |
| 0.04 | 0 | 1 |
| 0.05 | 0 | 1 |
| 0.08 | 0 | 1 |
| 0.10 | 0 | 1 |
| 0.15 | 0 | 1 |
| 0.20 | 0 | 1 |
| 0.40 | 0 | 1 |
| 0.60 | 0 | 1 |
| 0.80 | 0 | 1 |
| 0.98 | 0 | 1 |

**Table 2**

| Relative Concentration | Light Oil Decision Output | Gasoline Decision Output |
|---|---|---|
| 0.10 | 1 | 0 |
| 0.15 | 1 | 0 |
| 0.20 | 1 | 0 |
| 0.30 | 1 | 0 |
| 0.40 | 1 | 0 |
| 0.50 | 1 | 0 |
| 0.60 | 1 | 0 |
| 0.80 | 1 | 0 |
| 0.98 | 1 | 0 |

From the results shown in these Tables, it is understood that kinds of vapors can be distinguished when the concentrations of the gasoline vapor and the light oil vapor are higher than certain levels.

A fuel vapor distinguishing apparatus for distinguishing three kinds of fuel vapors, i.e., gasoline vapor, light oil vapor and methanol vapor, will be described hereinafter. The fuel vapor distinguishing apparatus has a structure similar to the distinguishing apparatus shown in Fig. 11 and is provided with three detecting units A, B and C for distinguishing the three kinds of fuel vapors. The polymer used for the sensor member in detecting unit A is poly (2-ethylhexyl methacrylate-co-glycidyl methacrylate), the polymer used for the sensor member in detecting unit B is poly(octadecyl methacrylate-co-glycidyl methacrylate), and the polymer used for the sensor member in detecting unit C is poly(3-methyl-4-hydroxystyrene-co-4-hydroxystyrene). However, it is noted that the polymer materials used are not restricted to the above polymers. These polymers are formed on a silicon substrate by the spin-coating method as a film having a thickness of about 400 nm.

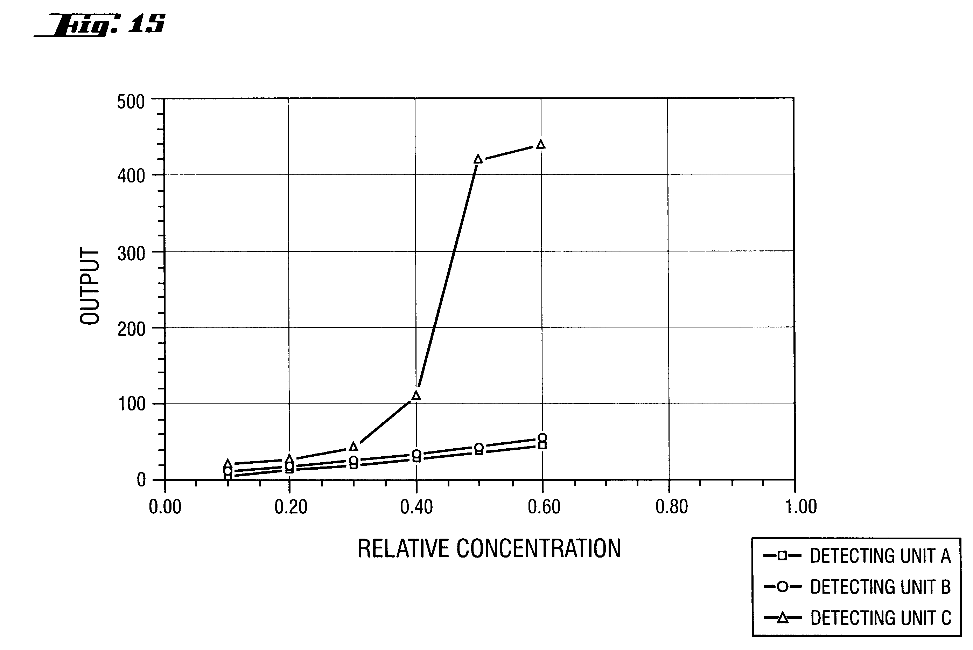

Figs. 13 to 15 represent the extent to which detecting units A to C are sensitive to a gasoline vapor, a light oil vapor and a methanol vapor, respectively. From Figs. 13 to 15, it is understood that detecting unit A has a higher sensitivity to the gasoline vapor than to the light oil vapor and has substantially no sensitivity to the methanol vapor, that detecting unit B has a higher sensitivity to the gasoline vapor than to the light oil vapor and has substantially no sensitivity to the methanol vapor and that detecting unit C has a high sensitivity to the methanol and has substantially no sensitivity to the gasoline vapor and the light oil vapor.

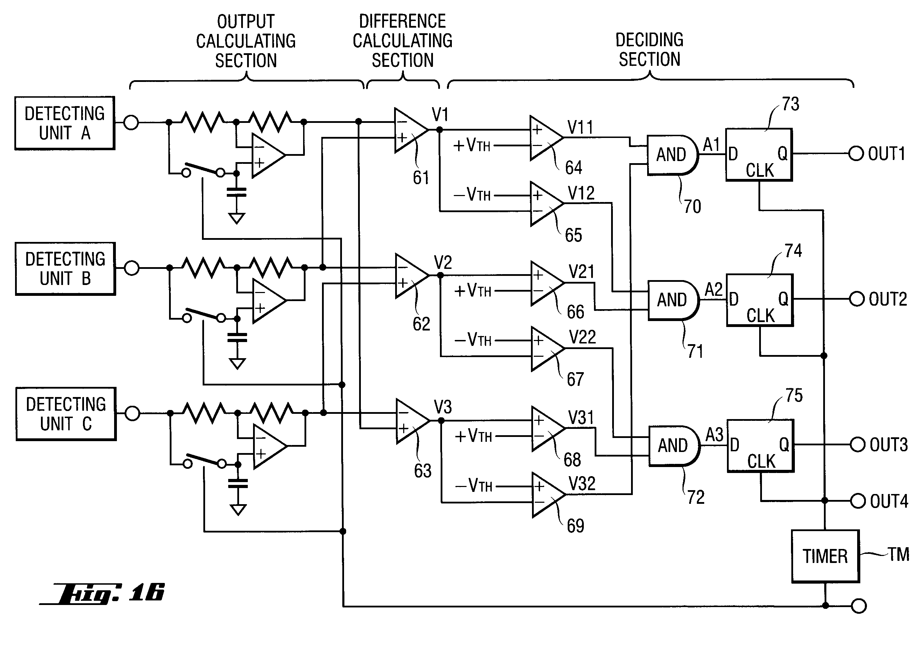

In view of the above sensitivity characteristics of detecting units A to C, Fig. 16 shows a circuit for distinguishing a gasoline vapor, a light oil vapor and a methanol vapor by means of these detecting units. This circuit has been designed for distinguishing three kinds of vapors by expanding the circuit for distinguishing two kinds of vapors shown in Fig. 9, and is similarly structured by an output calculating section, a difference calculating section and a deciding section. The output calculating section is provided with these systems corresponding to detecting units A, B and C, and the constructions and functions thereof are similar to those described with reference to Fig. 9. The outputs of the output calculating section are referred to as -Gas × S(A), -Gb × S(B) or -Gc × S(C), respectively.

The difference calculating section is provided with differential amplifiers 61, 62 and 63. An inverting input of first differential amplifier 61 is provided with -Ga × S(A) and a non-inverting input thereof is provided with -Gb × S(B), whereby output V1 of differential amplifier 61 is equal to Ga × S(A) - Gb × S(B).

An inverting input of second differential amplifier 62 is provided with -Gb × S(B) and a non-inverting input thereof is provided with -Gc × S(C), whereby output V2 of differential amplifier 62 is equal to Gb × S(B) - Gc × S(C). An inverting input of third differential amplifier 63 is provided with -Gc × S(C) and a non-inverting input thereof is provided with -Ga × S(A), whereby output V3 of differential amplifier 63 is equal to GC × S(C) - Ga × S(A).

The deciding section makes a decision on what kinds of fuel vapors are present based on whether outputs V1, V2 and V3 of differential amplifiers 61, 62 and 63 are negative or positive. According to Figs. 13 to 15 above, decisions are made in the following manner: Among six possible magnitude relationships, if Ga × S(A) > Gb × S(B) > Gc × S(C) and Ga × S(A) > Gc × S(C) > Gb × S(B), the fuel vapor is decided to be a gasoline vapor; if Gb × S(B) > Ga × S(A) > Gc × S(C) and Gb × S(B) > Gb × S(C) > Ga × S(A), the fuel vapor is decided to be a light oil vapor; and if Gc × S(C) > Gb × S(B) > Ga × S(A) and Gc × S(C) > Ga × S(A) > Gb × S(B), the full vapor is decided to be a methanol vapor.

To represent the above as a combination of the signs of V1, V2 and V3, if V1 > 0, V2 > 0, V3 < 0 or V1 > 0, V2 < 0 and V3 < 0, i.e., if V1 > 0 and V3 < 0, the fuel vapor is decided to be a gasoline vapor; if V1 < 0, V2 > 0, V3 < 0 or V1 < 0, V2 > 0 and V3 > 0, i.e., if V2 > 0 and V1 < 0, the fuel vapor is decided to be a light oil vapor; and if V1 > 0, V2 < 0, V3 > 0 or V1 < 0, V2 < 0 and V3 > 0, i.e., if V3 > 0 and V2 < 0, the fuel vapor is decided to be a methanol vapor. In order to make the above decisions, the deciding section includes six comparators 64 to 69, three AND circuits 70 to 72 and three flip-flops 73 to 75. Output V1 of differential amplifier 61 is fed to a non-inverting output of comparator 64 and an inverting input of comparator 65. Positive threshold voltage + V_{TH} is applied to an inverting input of comparator 64, and negative threshold voltage -V_{TH} is applied to a non-inverting input of comparator 65. As a result, output V11 of comparator 64 reaches a high level only when V1 > + V_{TH}, and output V12 of comparator 65 reaches a high level only when V1 < -V_{TH}. Similarly, output V2 of differential amplifier 62 is fed to comparators 66 and 67, and output V3 of differential amplifier 63 is fed to comparators 68 and 69. As a result, output V21 of comparator 66 reaches a high level when V2 > + V_{TH}; output V22 of comparator 67 reaches a high level when V2 < -V_{TH}; output V31 of comparator 68 reaches a high level when V3 > + V_{TH}; and output of V32 of comparator 69 reaches a high level when V3 < -V_{TH}. Output V11 of comparator 64 and output V32 of comparator 69 are applied to AND circuit 70; output V12 of comparator 65 and output V21 of comparator 66 are applied to AND circuit 71; and output V22 of comparator 67 and output V31 of comparator 68 are applied to AND circuit 72.

As a result, output A1 of AND circuit 70 reaches a high level when V1 > + V_{TH}, and V3 < -V_{TH}, that is, when the fuel vapor is a gasoline vapor; output A2 of AND circuit 71 reaches a high level when V2 > +V_{TH} and V1 < -V_{TH}, that is, when the fuel vapor is a light oil vapor; and output A3 of AND circuit 72 reaches a high level when V3 > + V_{TH} and V2 < -V_{TH}, that is, when the fuel vapor is a methanol vapor. Similar to the description with reference to Fig. 9, outputs A1 to A3 of AND circuits 70 to 72 are latched by corresponding flip-flops 73 to 75 after a lapse of a certain period of time from the time of supplying the fuel vapors, and any one of outputs OUT1, OUT2 and OUT3 of flip-flops 73 to 75 reaches a high level thereby indicating a result of distinction of fuel vapor.

Tables 3 to 5 below indicate that outputs V11, V12, V21, V22, V31 and V32 of the comparators 64 to 69 and outputs OUT1, OUT2 and OUT3 of flip-flops 73 to 75 are at a high level HI or at a low level LO depending on whether a fuel vapor is a gasoline vapor, a light oil vapor or a methanol vapor. In these Tables, threshold voltage ± V_{TH} is ± 5 mV.

**Table 3**

| Relative Concentration | V11 | V12 | V21 | V22 | V31 | V32 | OUT1 | OUT2 | OUT3 |
|---|---|---|---|---|---|---|---|---|---|
| 0.1 | HI | LO | HI | LO | LO | HI | HI | LO | LO |
| 0.2 | HI | LO | HI | LO | LO | HI | HI | LO | LO |
| 0.25 | HI | LO | HI | LO | LO | HI | HI | LO | LO |
| 0.3 | HI | LO | HI | LO | LO | HI | HI | LO | LO |
| 0.35 | HI | LO | HI | LO | LO | HI | HI | LO | LO |
| 0.4 | HI | LO | HI | LO | LO | HI | HI | LO | LO |

**Table 4**

| Relative Concentration | V11 | V12 | V21 | V22 | V31 | V32 | OUT1 | OUT2 | OUT3 |
|---|---|---|---|---|---|---|---|---|---|
| 0.1 | LO | LO | HI | LO | LO | HI | LO | LO | LO |
| 0.2 | LO | LO | HI | LO | LO | HI | LO | LO | LO |
| 0.3 | LO | HI | HI | LO | LO | HI | LO | HI | LO |
| 0.4 | LO | HI | HI | LO | LO | HI | LO | HI | LO |
| 0.5 | LO | HI | HI | LO | LO | HI | LO | HI | LO |
| 0.6 | LO | HI | HI | LO | LO | HI | LO | HI | LO |
| 0.7 | LO | HI | HI | LO | LO | HI | LO | HI | LO |
| 0.8 | LO | HI | HI | LO | LO | HI | LO | HI | LO |
| 0.9 | LO | HI | HI | LO | LO | HI | LO | HI | LO |
| 1.0 | LO | HI | HI | LO | LO | HI | LO | HI | LO |

**Table 5**

| Relative Concentration | V11 | V12 | V21 | V22 | V31 | V32 | OUT1 | OUT2 | OUT3 |
|---|---|---|---|---|---|---|---|---|---|
| 0.1 | LO | LO | LO | HI | HI | LO | LO | LO | LO |
| 0.2 | LO | HI | LO | HI | HI | LO | LO | LO | LO |
| 0.3 | LO | HI | LO | HI | HI | LO | LO | LO | HI |
| 0.4 | LO | HI | LO | HI | HI | LO | LO | LO | HI |
| 0.5 | LO | HI | LO | HI | HI | LO | LO | LO | HI |
| 0.6 | LO | HI | LO | HI | HI | LO | LO | LO | HI |

From the results shown in the above Tables, it is understood that, when a relative concentration of a fuel vapor to be measured is higher than a certain level, any one of outputs OUT1, OUT2 and OUT3 of flip-flops 73 to 75 reaches a high level when the fuel vapor is a gasoline vapor, a light oil vapor or a methanol vapor, enabling fuel vapors to be distinguished.

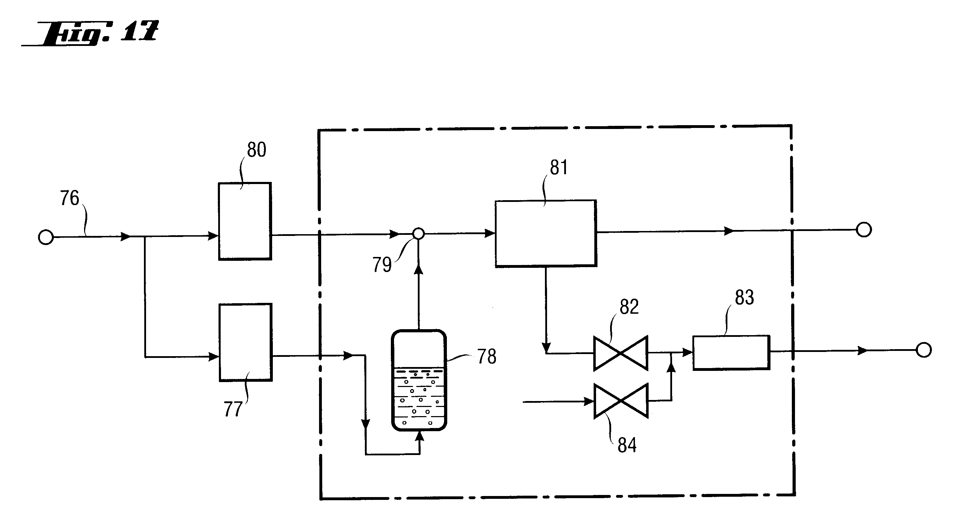

In this example, in order to evaluate the performance of the fuel vapor distinguishing apparatus, a gasoline vapor, a light oil vapor and a methanol vapor can be supplied at arbitrary concentrations to the fuel vapor distinguishing apparatus in a manner similar to a so-called divided flow method in which any humidity can be generated. A system construction used for this purpose is shown in Fig. 17. In Fig. 17, a carrier gas flow (a nitrogen gas) 76 is divided into two flows, one of the flows is introduced into a bubbler 78 containing a fuel (gasoline, light oil, etc.) through a mass flow rate controller 77. In bubbler 78, one of the carrier gas flows is substantially saturated with a vapor of the fuel and directed to a junction 79. The other of the carrier gas flows is directed to junction 79 through a mass flow rate controller 80. The two flows are combined at the junction. In this manner, a fuel vapor having a concentration which is determined by a ratio of the mass flow rates of the two flows is generated. A vapor reservoir 81 is connected to a fuel vapor supply port of a fuel vapor distinguishing apparatus 83 of the present invention through a valve 82, and a fuel vapor discharge port of the apparatus is connected to a suction apparatus (not shown). Fuel vapor distinguishing apparatus 83 is also connected to an air supply source through a valve 84. Bubbler 78, vapor reservoir 81, valves 82 and 84 and fuel vapor distinguishing apparatus 83 are disposed in a thermostatic chamber (shown by a dot and chain line). Considering application to an actual oil dispensing machine, air is sucked if valve 82 is closed and valve 84 is opened. In distinguishing a fuel vapor, valve 82 is opened and valve 84 is closed and a fuel vapor is introduced from vapor reservoir 81 to fuel vapor distinguishing apparatus 83.

Assuming that a pure liquid is contained in bubbler 78, that a saturated vapor pressure at a current temperature is indicated by Ps, that a flow rate of one of the carrier gas flows in bubbler 78 is indicated by αF, that a flow rate of the other carrier gas flows is indicated by (1-α)F, and that the carrier gas is completely saturated with the fuel vapor in bubbler 78, the pressure P of vapor of the liquid is equal to αPₛ. A ratio of the pressure of vapor of the liquid and the satured vapor pressure, P/Pₛ, is called a relative concentration of the liquid vapor, which is equal to α. The relative concentration ranges between 0 and 1 at any temperature. Although a relative concentration cannot be defined strictly in the case of a mixture such as gasoline and light oil, α can be considered to be an index representing an approximate concentration. Accordingly, in the cases of a gasoline vapor and a light oil vapor, α may be considered to be a relative concentration.

## Claims

1. An organic gas distinguishing apparatus comprising:
m sensor members each exhibiting unique reflective characteristics when in contact with m different kinds of gas where m is an integer equal to two or more;
m light source members each provided for each of the m sensor members for irradiating a corresponding one of the sensor members;
m detecting members each provided for each of the sensor members for receiving light emitted from a corresponding one of the m light source members and reflected from the corresponding one of the sensor members so as to output a signal representing the amplitude of the received light; and
a circuit for distinguishing between the organic gases on the basis of the signs of the obtained differences by comparing the differences in magnitude between signals obtained from respective m kinds of organic gas by the detecting members, thereby distinguishing between the m kinds of organic gas by processing signals obtained from the m detecting members when the m sensor members are disposed in an organic gas to be measured.

2. An organic gas distinguishing apparatus as set forth in claim 1, wherein each of the sensor members comprises a reflecting substrate, and a polymer film formed on the reflecting substrate; each of the polymer films exhibiting unique and different reflective characteristics when in contact with the m kinds of organic gas.

3. An organic gas distinguishing apparatus as set forth in claim 2, wherein a reflective characteristic of the sensor member is defined by a product of the thickness of the polymer film and the refractive index thereof.

4. An organic gas distinguishing apparatus as set forth in any one of claims 1-3, wherein at least one of the light source members comprises a light emitter such as a semiconductor laser and a light emitting diode, and wherein at least one of the detecting members comprises a light detector such as a photodiode and a phototransistor.

5. An organic gas distinguishing apparatus as set forth in any one of claims 1-3, wherein at least one of the light source members is structured to focus light from a light emitter such as a semiconductor laser and a light emitting diode through an optical fiber and a collimator to the corresponding sensor member.

6. An organic gas distinguishing apparatus as set forth in any one of claims 1-3, wherein at least one of the detecting members is structured to connect a light detector such as a photodiode and a phototransistor through an optical fiber to a collimator, whereby light emitted from the corresponding light source member and reflected from the sensor member is received by the collimator, the received light being supplied through the optical fiber to the light detector.

7. An organic gas distinguishing apparatus as set forth in any one of claims 1-6, wherein a light emitting end of the light source member and a light receiving end of the corresponding detecting member are disposed to face the corresponding sensor member.

8. An organic gas distinguishing apparatus as set forth in any one of claims 1-7, wherein the apparatus is structured in a housing in which at least light emitting ends of the m light source members and at least light receiving ends of the m detecting members are disposed to face the m sensor members through a passage of the organic vapor.

9. An organic gas distinguishing apparatus as set forth in any one of claims 1-8, wherein the organic gas is an fuel vapor.
